# EUROPÄISCHE PATENTSCHRIFT

(11) **EP 4 555 547 B1**
(45) Veröffentlichungstag und Bekanntmachung des Hinweises auf die Patenterteilung: **01.04.2026**
(21) Anmeldenummer: 23739572.8
(22) Anmeldetag: 10.07.2023
(51) Int. Cl.: H01H 9/54, H01H 33/59, H02H 9/02

(54) **GLEICHSPANNUNGSSCHALTGERÄT ZUM VORLADEN PARASITÄRER KAPAZITÄTEN UND SCHALTSYSTEM MIT DIESEM GLEICHSPANNUNGSSCHALTGERÄT**
DC VOLTAGE SWITCHING DEVICE FOR PRECHARGING PARASITIC CAPACITANCES AND SWITCHING SYSTEM WITH THIS SWITCHING DEVICE
APPAREIL DE COMMUTATION EN TENSION CONTINUE POUR LA PRÉCHARGE DE CAPACITÉS PARASITES ET SYSTÈME DE COMMUTATION AVEC LEDIT APPAREIL DE COMMUTATION

(30) Priorität: 11.07.2022 LU 502489
(43) Veröffentlichungstag der Anmeldung: 21.05.2025
(73) Patentinhaber: PHOENIX CONTACT GMBH & CO. KG, 32825 Blomberg (DE)
(72) Erfinder: GROTE, Tobias, 32676 Lüdge (DE); HEUER, Lutz, 32825 Blomberg (DE); SCHÜRGENS, Detlev, 32825 Blomberg (DE)
(74) Vertreter: Blumbach · Zinngrebe Patentanwälte PartG mbB
(86) Internationale Anmeldenummer: PCT/EP2023/069057
(87) Internationale Veröffentlichungsnummer: WO 2024/013105

(56) Entgegenhaltungen:
- CN-A- 105 680 411
- DE-A1- 102018 101 309
- US-A1- 2020 185 163

## Beschreibung

Die vorliegende Erfindung betrifft ein Gleichspannungsschaltgerät zum Koppeln, insbesondere zum Einschalten einer Gleichspannungslast, umfassend einen ersten und zweiten Eingangsanschluss zum Anlegen einer externen Gleichspannung, einen ersten und zweiten Ausgangsanschluss zum elektrischen Anschließen einer Gleichspannungslast, einen zwischen dem ersten Eingangsanschluss und dem ersten Ausgangsanschluss verlaufenden Plusleiter und einen zwischen dem zweiten Eingangsanschluss und dem zweiten Ausgangsanschluss verlaufenden Minusleiter, einen in dem Plusleiter angeordneten elektromechanischen Schalter und einen in dem Minusleiter angeordneten elektromechanischen Schalter sowie ein erstes halbleiterbasiertes, ansteuerbares Schaltelement, welches in dem Plusleiter oder in dem Minusleiter angeordnet ist.

Zum Koppeln eine Gleichspannungslast, d.h. insbesondere um eine Gleichspannungslast an eine Gleichspannungsquelle elektrisch anzukoppeln bzw. anzuschließen aber auch zum elektrischen Abkoppeln der Gleichspannungslast, wird üblicherweise ein Gleichspannungsschaltgerät verwendet, wie zum Beispiel in der US 2020/185163 A1 beschrieben. Die Eingangsanschlüsse des Gleichspannungsschaltgeräts werden zunächst zum Anlegen einer externen Gleichspannung mit einer Gleichspannungsquelle, z.B. einem Gleichspannungsbus, elektrisch verbunden, während die Ausgangsanschlüsse des Gleichspannungsschaltgeräts mit der an die Gleichspannung anzuschließenden Gleichspannungslast elektrisch verbunden werden. Zum elektrischen Zu- und Abschalten, also zum An- und Abkoppeln, der Gleichspannungslast umfasst das Gleichspannungsschaltgerät zumindest ein Schaltelement. Häufig kommt hierfür ein steuerbares Halbleiterschaltelement zum Einsatz, welches in dem zwischen dem ersten Eingangsanschluss und dem ersten Ausgangsanschluss verlaufenden Plusleiter oder in dem zwischen dem zweiten Eingangsanschluss und dem zweiten Ausgangsanschluss verlaufenden Minusleiter angeordnet ist. Ferner kann zusätzlich jeweils ein elektromechanischer Schalter in dem Plusleiter und in dem Minusleiter vorgesehen sein. Ist das Halbleiterschaltelement leitend geschaltet und befinden sich die ggf. vorhandenen elektromechanischen Schalter in einem geschlossenen Zustand, so erfolgt ein Stromfluss zwischen der Gleichspannungsquelle und der Gleichspannungslast. Dieser Stromfluss kann durch ein Ausschalten bzw. Öffnen des Halbleiterschaltelements hingegen unterbunden bzw. unterbrochen werden.

Zu Beginn eines Einschaltvorgangs eines Gleichspannungsschaltgeräts nimmt das Gleichspannungsschaltgerät in der Regel einen Ausgangszustand ein, bei welchem zunächst alle im Gleichspannungsschaltgerät vorhandenen Schaltelemente geöffnet sind. Üblicherweise werden von diesem Ausgangszustand ausgehend zunächst die ggf. vorhandenen elektromechanischen Schalter in dem Plusleiter und in dem Minusleiter des Gleichspannungsschaltgeräts geschlossen, wobei das Schließen der elektromechanischen Schalter entweder gleichzeitig oder zeitversetzt erfolgen kann. Möglicherweise wird anschließend eine Vorladeschaltung zum Laden von Kapazitäten auf der Ausgangsseite des Gleichspannungsschaltgeräts auf das jeweilige Eingangsspannungsniveau zugeschaltet bzw. aktiviert. Im letzten Schritt des Einschaltvorgangs erfolgt ein Ansteuern des Halbleiterschaltelements derart, dass dieses elektrisch leitend geschaltet wird, wodurch die Gleichspannungslast an die entsprechende Gleichspannungsquelle elektrisch gekoppelt bzw. angeschlossen wird.

Das Halbleiterschaltelement sowie optional auch zu dem Halbleiterschaltelement parallel geschaltete Schaltungselemente mit kapazitivem Anteil, wie z.B. Snubber-Schaltkreise, enthalten typischerweise parasitäre Kapazitäten, welche zu Beginn des Einschaltvorgangs grundsätzlich entladen sind. Sobald auch der zweite der beiden elektromechanischen Schalter geschlossen wird, liegt die gesamte Eingangsspannung über dem Halbleiterschaltelement an. Dieser Spannungssprung verursacht einen Strompeak bzw. eine Stromspitze, bis die parasitären Kapazitäten auf das Eingangsspannungsniveau geladen sind. Da der auftretende Strompeak mit dem Einschaltvorgang des zweiten der beiden elektromechanischen Schalter zeitlich zusammenfällt, ist dies für den betreffenden elektromechanischen Schalter nachteilhaft, denn es führt zumindest zu einem größeren Verschleiß des betreffenden elektromechanischen Schalters und kann bei entsprechend hohen Stromspitzen letztendlich auch zu einer Zerstörung des betreffenden elektromechanischen Schalters führen.

Vor diesem Hintergrund ist es zumindest eine Aufgabe der vorliegenden Erfindung, ein Gleichspannungsschaltgerät bereitzustellen, welches die zuvor genannten Nachteile auf möglichst einfache und kostengünstige Weise ausräumt und insbesondere ein Vorliegen von Stromspitzen beim Schließen des zweiten der beiden elektromechanischen Schalter vermeidet, und somit eine möglichst lange technische Lebensdauer des betreffenden elektromechanischen Schalters und folglich des Gleichspannungsschaltgeräts gewährleistet.

Die Lösung der Erfindung ist durch einen Gegenstand mit den Merkmalen des unabhängigen Anspruchs 1 wiedergegeben. Vorteilhafte Ausgestaltungen und Weiterentwicklungen sind Gegenstand der weiteren Merkmale der Unteransprüche.

Dementsprechend betrifft die Lösung gemäß der Erfindung ein Gleichspannungsschaltgerät zum Koppeln, insbesondere zum Einschalten einer Gleichspannungslast, umfassend einen ersten und einen zweiten Eingangsanschluss, die zum Anlegen einer externen Gleichspannung ausgebildet sind, einen ersten und einen zweiten Ausgangsanschluss, die zum elektrischen Anschließen einer Gleichspannungslast ausgebildet sind, einen Plusleiter, der zwischen dem ersten Eingangsanschluss und dem ersten Ausgangsanschluss verläuft, sowie einen Minusleiter, der zwischen dem zweiten Eingangsanschluss und dem zweiten Ausgangsanschluss verläuft. Ferner umfasst das Gleichspannungsschaltgerät ein erstes halbleiterbasiertes, ansteuerbares Schaltelement, welches in dem Plusleiter oder in dem Minusleiter angeordnet ist, sowie einen in dem Plusleiter angeordneten elektromechanischen Schalter und einen in dem Minusleiter angeordneten elektromechanischen Schalter. Das Gleichspannungsschaltgerät zeichnet sich dadurch aus, dass es einen ersten Vorladezweig aufweist, welcher eine Reihenschaltung eines zweiten ansteuerbaren Schaltelements und einer ersten Strombegrenzungseinrichtung umfasst und welcher zwischen dem Plusleiter und dem Minusleiter angeordnet ist. Der erste Vorladezweig ist dazu eingerichtet, zumindest parasitäre Kapazitäten des ersten Schaltelements auf ein Eingangsspannungsniveau aufzuladen, wenn sich das Gleichspannungsschaltgerät in einem Zustand befindet, in welchem eine externe Gleichspannung an die Eingangsanschlüsse angelegt ist, das erste Schaltelement und zumindest einer der elektromechanischen Schalter geöffnet sind und das zweite Schaltelement geschlossen ist. Ferner umfasst das Gleichspannungsschaltgerät eine Steuereinrichtung zum Aktivieren des ersten Vorladezweigs. Das Gleichspannungsschaltgerät zeichnet sich dadurch aus, dass die Steuereinrichtung zum Ansteuern des ersten und des zweiten Schaltelements und der elektromechanischen Schalter gemäß einer vorbestimmten Steuerungslogik ausgebildet ist derart, dass die Steuereinrichtung den ersten Vorladezweig zum Aufladen zumindest parasitärer Kapazitäten des ersten Schaltelements in einem strombegrenzten Modus aktiviert, bevor sich das Gleichspannungsschaltgerät in einem Zustand befindet, in welchem beide elektromechanischen Schalter geschlossen sind.

Um zu vermeiden, dass es während eines Einschaltvorgangs des Gleichspannungsschaltgeräts zu einer zeitgleich zu einem Schließen zumindest eines der zwei elektromechanischen Schalter auftretenden Stromspitze kommt, welche den betreffenden elektromechanischen Schalter bzw. die betreffenden elektromechanischen Schalter belastet und ferner beschädigen oder sogar zerstören kann, ist in der vorliegenden Erfindung ein zwischen dem Plus- und Minusleiter angeordneter erster Vorladezweig vorgesehen. Dieser erste Vorladezweig umfasst eine Reihenschaltung eines zweiten ansteuerbaren Schaltelements und einer ersten Strombegrenzungseinrichtung und ist dazu ausgebildet, während des Einschaltvorgangs des Gleichspannungsschaltgeräts parasitäre Kapazitäten auf der Eingangsseite des Gleichspannungsschaltgeräts aufzuladen, bevor zumindest der zweite der beiden elektromechanischen Schalter geschlossen wird, d.h. bevor das Gleichspannungsschaltgerät sich in einem Zustand befindet, in welchem beide elektromechanischen Schalter geschlossen sind. D. h. der erste Vorladezweig wird zum Aufladen parasitärer Kapazitäten auf der Eingangsseite des Gleichspannungsschaltgeräts in einem strombegrenzten Modus aktiviert, bevor zumindest der zweite der beiden elektromechanischen Schalter geschlossen wird. Der Einschaltvorgang des Gleichspannungsschaltgeräts beschreibt im Rahmen der Erfindung den Zeitraum der erforderlichen Schritte bis zu einem elektrischen Anschließen der Gleichspannungslast an die externe Gleichspannung mittels des Gleichspannungsschaltgeräts, und zwar beginnend mit einem Ausgangszustand des Gleichspannungsschaltgeräts, in welchem alle im Gleichspannungsschaltgerät vorhandenen Schaltelemente in einem elektrisch nichtleitenden bzw. geöffneten Zustand sind und ferner eine externe Gleichspannung an die Eingangsanschlüsse des Gleichspannungsschaltgeräts angelegt ist sowie eine Gleichspannungslast an die Ausgangsanschlüsse des Gleichspannungsschaltgeräts angeschlossen ist.

Der erste Vorladezweig ist dazu eingerichtet und ausgebildet, zumindest parasitäre Kapazitäten des ersten Schaltelements und optional auch parasitäre Kapazitäten einer Anzahl von weiteren, insbesondere parallel zu dem ersten Schaltelement angeordneten, Schaltungselementen mit kapazitivem Anteil, auf ein Eingangsspannungsniveau aufzuladen, wenn sich das Gleichspannungsschaltgerät in einem Zustand befindet, in welchem eine externe Gleichspannung an die Eingangsanschlüsse angelegt ist, das erste Schaltelement und zumindest einer der elektromechanischen Schalter geöffnet sind und das zweite Schaltelement des ersten Vorladezweigs geschlossen ist. Befindet sich das Gleichspannungsschaltgerät in dem zuvor beschriebenen Zustand, so erfolgt ein Stromfluss durch den ersten Vorladezweig, welcher mittels der ersten Strombegrenzungseinrichtung, d.h. der Strombegrenzungseinrichtung des ersten Vorladezweigs, begrenzt wird. Dieser Stromfluss bewirkt ein Aufladen von parasitären Kapazitäten des ersten Schaltelements und optional auch von parasitären Kapazitäten weiterer, insbesondere parallel zu dem ersten Schaltelement angeordneter, Schaltungselemente mit kapazitivem Anteil auf der Eingangsseite des Gleichspannungsschaltgeräts. Erst nachdem die eingangsseitigen parasitären Kapazitäten mittels des ersten Vorladezweigs aufgeladen worden sind, wird jeder der beiden elektromechanischen Schalter, der sich noch in einem geöffneten Zustand befindet, geschlossen. Somit fließt durch keinen der beiden elektromechanischen Schalter ein Strom mit einer kurzzeitigen Stromspitze, was zu einem geringeren Verschleiß und infolgedessen zu einer längeren technischen Lebensdauer der betreffenden elektromechanischen Schalter führt.

Gemäß einer Weiterentwicklung ist die Steuereinrichtung mit dem ersten und dem zweiten Schaltelement und mit den elektromechanischen Schaltern verbundene und dazu eingerichtet, zu Beginn eines Einschaltvorgangs des Gleichspannungsschaltgeräts, zu dem eine externe Gleichspannung an die Eingangsanschlüsse angelegt ist, eine Gleichspannungslast an die Ausgangsanschlüsse angeschlossen ist und sich das erste Schaltelement, das zweite Schaltelement und die elektromechanischen Schalter jeweils im geöffneten Zustand befinden, zunächst das zweite Schaltelement zum Schließen anzusteuern. Ferner ist die Steuereinrichtung dazu eingerichtet, anschließend die elektromechanischen Schalter zum Schließen anzusteuern, und zwar derart, dass sie zumindest einen der elektromechanischen Schalter erst nach einem vollständigen Aufladen von zumindest parasitären Kapazitäten des ersten Schaltelements mittels des ersten Vorladezweigs auf ein Eingangsspannungsniveau zum Schließen ansteuert. Zudem ist die Steuereinrichtung dazu eingerichtet, insbesondere daran anschließend das zweite Schaltelement zum Öffnen und das erste Schaltelement zum Schließen anzusteuern und somit ein elektrisches Ankoppeln bzw. Anschließen der Gleichspannungslast an die externe Gleichspannung zu veranlassen. Die Steuereinrichtung kann insbesondere als Mikrocontroller oder als sog. Field Programmable Gate Array (FPGA) ausgebildet sein. Die Steuereinrichtung dient dazu, zumindest das erste und das zweite Schaltelement sowie zumindest die beiden elektromechanischen Schalter anzusteuern, d. h. zum Schließen bzw. Öffnen des jeweiligen Schaltelements bzw. Schalters zu veranlassen.

In einer Weiterentwicklung kann das erfindungsgemäße Gleichspannungsschaltgerät ferner einen zweiten Vorladezweig umfassen, der parallel zu dem ersten Schaltelement geschaltet ist und zum Aufladen von Kapazitäten auf der Ausgangsseite des Gleichspannungsschaltgeräts eingerichtet ist. Ein solcher zweite Vorladezweig kann beispielhaft eine Reihenschaltung eines dritten ansteuerbaren Schaltelements und einer zweiten Strombegrenzungseinrichtung umfassen. Dies hat u.a. den Vorteil, dass die Kapazitäten auf der Ausgangsseite des Gleichspannungsschaltgeräts in einem strombegrenzen Modus, und somit langsamer, aufgeladen werden können. Zudem werden sowohl die beiden in Plusleiter und Minusleiter angeordneten elektromechanischen Schalter, und ferner auch die elektrisch angeschlossene Gleichspannungslast, aufgrund des strombegrenzten Modus weniger belastet, sodass sie einen geringeren Verschleiß erfahren.

Die erste Strombegrenzungseinrichtung und ergänzend oder alternativ dazu die zweite Strombegrenzungseinrichtung können beispielsweise zumindest einen ohmschen Widerstand umfassen oder gemäß einer weiteren Ausführungsform einen Tiefsetzsteller aufweisen.

Das zweite Schaltelement des ersten Vorladezweigs kann beispielhaft als Feldeffekttransistor, insbesondere als MOSFET, als IGBT oder als Relaiskontakt ausgebildet sein.

Ergänzend oder alternativ zu dem zweiten Vorladezweig kann ferner eine parallel zu dem ersten Schaltelement geschaltete Überspannungsschutzeinrichtung in dem Gleichspannungsschaltgerät vorgesehen sein. Da die Überspannungsschutzeinrichtung parasitäre Kapazitäten enthalten kann, ist im Rahmen der Erfindung vorgesehen, dass der erste Vorladezweig des Gleichspannungsschaltgeräts ebenfalls zum Aufladen der parasitären Kapazitäten der Überspannungsschutzeinrichtung ausgebildet ist, und zwar bevor die beiden elektromechanischen Schalter des Gleichspannungsschaltgeräts einen elektrisch leitenden bzw. geschlossenen Zustand einnehmen.

Darüber hinaus kann das Gleichspannungsschaltgerät zudem einen weiteren elektromechanischen Schalter aufweisen, der parallel zu dem ersten Schaltelement geschaltet ist. Dieser weitere elektromechanische Schalter ist dazu eingerichtet, eine Verlustleistung zu reduzieren, wenn sich das erste Schaltelement bei einem Schließen des weiteren elektromechanischen Schalters in einem elektrisch leitenden Zustand befindet, d.h. wenn der weitere elektromechanische Schalter geschlossen wird und sich das erste Schaltelement im elektrisch leitenden Zustand befindet. Somit können insbesondere Durchlassverluste des ersten Schaltelements, wenn dieses sich in einem elektrisch leitenden Zustand befindet, verringert werden.

Ferner kann in einer Weiterentwicklung vorgesehen sein, dass die in Plusleiter und Minusleiter integrierten elektromechanischen Schalter als Relais bzw. Relaiskontakte ausgebildet sind. Ergänzend oder alternativ dazu kann das erste Schaltelement beispielhaft zwei antiseriell geschaltete Halbleiterschalter umfassen.

Zudem kann das erfindungsgemäße Gleichspannungsschaltgerät in einer Weiterentwicklung derart ausgebildet sein, dass der Plusleiter und der Minusleiter als Leiterbahnen auf einer Platine ausgeführt sind.

Des Weiteren betrifft die vorliegende Erfindung ein Schaltsystem mit einem erfindungsgemäßen Gleichspannungsschaltgerät gemäß einer der zuvor beschriebenen Ausgestaltungsformen, wobei das Schaltsystem ferner eine an die Ausgangsanschlüsse des Gleichspannungsschaltgeräts angeschlossene Gleichspannungslast und eine an die Eingangsanschlüsse des Gleichspannungsschaltgeräts angeschlossene Gleichspannungsquelle, welche insbesondere als Gleichspannungsbus ausgebildet ist, umfasst.

Weitere Vorteile, Merkmale und Anwendungsmöglichkeiten der vorliegenden Erfindung werden anhand der folgenden Beschreibung von Ausführungsformen davon sowie der dazugehörigen Figuren deutlich. Es zeigen:
- Figur 1:: Schaltbild eines Gleichspannungsschaltgeräts gemäß einer ersten Ausführungsform der Erfindung,
- Figur 2:: Schaltbild eines Gleichspannungsschaltgeräts gemäß einer zweiten Ausführungsform der Erfindung,
- Figur 3:: Schaltbild eine alternativen Ausführungsform eines ersten Schaltelements des Gleichspannungsschaltgeräts gemäß Figur 1 oder 2.

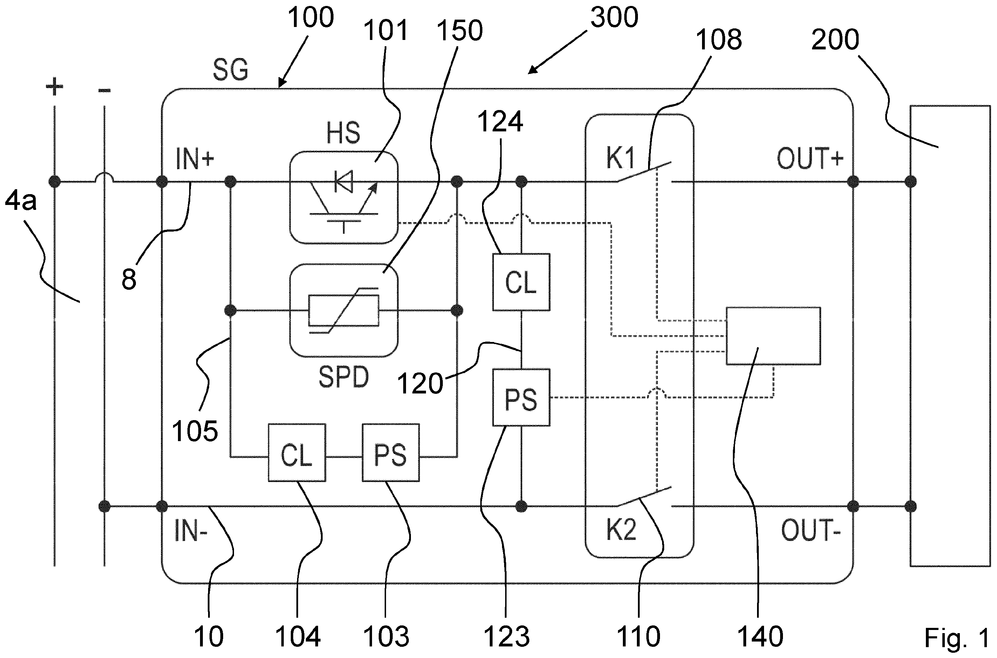

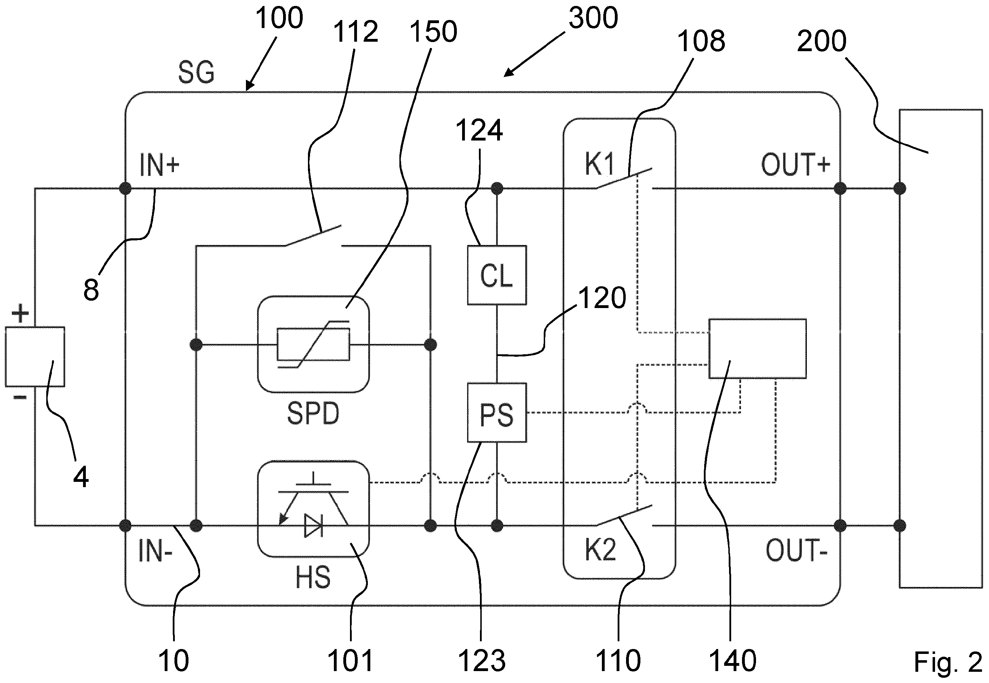

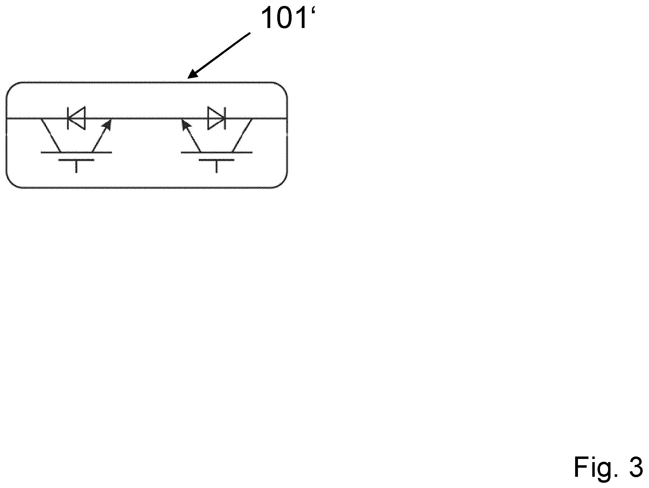

Die Figur 1 zeigt ein Schaltbild eines Gleichspannungsschaltgeräts 100 zum Koppeln, insbesondere Einschalten einer Gleichspannungslast 200 gemäß einer ersten Ausführungsform der Erfindung. Wie in Figur 1 zu sehen, umfasst das Gleichspannungsschaltgerät 100 einen ersten Eingangsanschluss IN+ und einen zweiten Eingangsanschluss IN-, die zum Anlegen einer externen Gleichspannung ausgebildet sind. Im dargestellten Beispiel sind die Eingangsanschlüsse IN+, IN- an eine Gleichspannungsquelle angeschlossen, welche beispielhaft als Gleichspannungsbus 4a ausgebildet ist. Zudem umfasst das Gleichspannungsschaltgerät 100 einen ersten Ausgangsanschluss OUT+ und einen zweiten Ausgangsanschluss OUT-, die zum elektrischen Anschließen einer Gleichspannungslast 200 ausgebildet sind, wobei im Beispiel der Figur 1 die Gleichspannungslast 200 bereits an die Ausgangsanschlüsse OUT+, OUT- angeschlossen ist. Das Gleichspannungsschaltgerät 100 weist ferner einen Plusleiter 8, der zwischen dem ersten Eingangsanschluss IN+ und dem ersten Ausgangsanschluss OUT+ verläuft, und einen Minusleiter 10, der zwischen dem zweiten Eingangsanschluss IN- und dem zweiten Ausgangsanschluss OUT- verläuft, auf. Der Plusleiter 8 und der Minusleiter 10 können beispielsweise als Leiterbahnen auf einer Platine ausgeführt sein. Des Weiteren umfasst das Gleichspannungsschaltgerät 100 ein erstes halbleiterbasiertes, ansteuerbares Schaltelement 101, welches in dem Beispiel der Figur 1 in dem Plusleiter 8 angeordnet ist, sowie einen in dem Plusleiter 8 angeordneten elektromechanischen Schalter 108 und einen in dem Minusleiter 10 angeordneten elektromechanischen Schalter 110. In dem Ausführungsbeispiel der Figur 1 sind diese in Plusleiter 8 und Minusleiter 10 integrierten elektromechanischen Schalter 108, 110 als Relais bzw. Relaiskontakte ausgebildet, während das erste Schaltelement 101 beispielhaft als ein Halbleiterschalter ausgebildet ist. Das erste Schaltelement 101 ist nicht auf die in den Figuren 1 und 2 gezeigten Ausführungsformen begrenzt und kann beispielsweise auch zwei antiseriell geschaltete Halbleiterschalter umfassen. Ein solches erstes Schaltelement 101' umfassend zwei antiseriell geschaltete Halbleiterschalter ist in Figur 3 beispielhaft dargestellt.

Das Gleichspannungsschaltgerät 100 zeichnet sich dadurch aus, dass es ferner einen ersten Vorladezweig 120 umfasst. Dieser erste Vorladezweig 120 ist zwischen dem Plusleiter 8 und dem Minusleiter 10 angeordnet und weist eine Reihenschaltung eines zweiten ansteuerbaren Schaltelements 123 und einer ersten Strombegrenzungseinrichtung 124 auf. Im Beispiel der Figur 1 ist das zweite Schaltelement 123 beispielhaft als Feldeffekttransistor, insbesondere als MOSFET ausgebildet, kann aber in weiteren Ausführungsformen auch beispielsweise als IGBT oder als Relaiskontakt ausgebildet sein. Die Strombegrenzungseinrichtung 124 des ersten Vorladezweigs 120 umfasst gemäß Figur 1 einen ohmschen Widerstand, ist jedoch nicht auf diese Ausführungsform beschränkt. So kann die Strombegrenzungseinrichtung 124 u.a. beispielsweise als Schaltungsanordnung ausgebildet sein, die einen Tiefsetzsteller umfasst.

Der erste Vorladezweig 120 ist dazu eingerichtet und ausgebildet, während eines Einschaltvorgangs des Gleichspannungsschaltgeräts 100 parasitäre Kapazitäten auf der Eingangsseite des Gleichspannungsschaltgeräts 100 in einem strombegrenzten Modus auf das Eingangsspannungsniveau aufzuladen, wenn zumindest einer der beiden elektromechanischen Schalter 108, 110 noch geöffnet bzw. elektrisch nichtleitend ist, das zweite Schaltelement 123 des ersten Vorladezweigs 120 geschlossen bzw. elektrisch leitend ist und ferner eine externe Gleichspannung an die Eingangsanschlüsse IN+, INdes Gleichspannungsschaltgeräts 100 angelegt ist. Erst nach einem vollständigen Aufladen der eingangsseitigen parasitären Kapazitäten des Gleichspannungsschaltgeräts 100 wird jeder elektromechanische Schalter 108, 110, der sich noch in einem geöffneten Zustand befindet, geschlossen und somit elektrisch leitend geschaltet. Durch den zwischen Plusleiter 8 und Minusleiter 10 angeordneten ersten Vorladezweig 120 kann vorteilhafterweise vermieden werden, dass es während eines Einschaltvorgangs des Gleichspannungsschaltgeräts 100 zeitgleich zu dem Schließen eines oder beider der zwei elektromechanischen Schalter 108, 110 zu einem Strompeak bzw. einer Stromspitze kommt. Eine solche Stromspitze resultiert gewöhnlicherweise aus einem Spannungssprung, der durch eine vollständig anliegende Eingangsspannung infolge des Schließens beider elektromechanischer Schalter 108, 110 verursacht wird, und wirkt sich auf die elektromechanischen Schalter 108, 110 nachteilhaft aus. Beispielsweise kann eine zeitgleich zu dem Schließen eines jeweiligen der elektromechanischen Schalter 108, 110 auftretende Stromspitze die technische Lebensdauer des betreffenden elektromechanischen Schalters aufgrund eines größeren Verschleißes reduzieren, den betreffenden elektromechanischen Schalter beschädigen oder sogar zerstören.

Wie in Figur 1 zu sehen, ist der erste Vorladezweig 120 dazu eingerichtet, zumindest die parasitären Kapazitäten des ersten Schaltelements 101 auf ein Eingangsspannungsniveau aufzuladen, wenn sich das Gleichspannungsschaltgerät 100 in einem Zustand befindet, in welchem eine externe Gleichspannung an die Eingangsanschlüsse IN+, IN- angelegt ist, das erste Schaltelement 101 und zumindest einer der elektromechanischen Schalter 108, 110 geöffnet sind und das zweite Schaltelement 123 geschlossen ist, wie dies in Figur 1 skizziert ist. In einem zuvor beschriebenen Zustand erfolgt ein Stromfluss durch den ersten Vorladezweig 120, welcher durch die darin angeordnete erste Strombegrenzungseinrichtung 124 begrenzt wird. Dieser Stromfluss bewirkt ein Aufladen der parasitären Kapazitäten des ersten Schaltelements 101 und optional auch von parasitären Kapazitäten weiterer, insbesondere parallel zu dem ersten Schaltelement 101 angeordneter, Schaltungselemente mit kapazitivem Anteil, wie z.B. einer in Figur 1 gezeigten parallel zu dem ersten Schaltelement 101 geschalteten Überspannungsschutzeinrichtung 150, auf der Eingangsseite des Gleichspannungsschaltgeräts 100, und zwar in einem strombegrenzten Modus.

Um die einzelnen Schaltprozesse der jeweiligen Schaltbauteile des Gleichspannungsschaltgeräts 100 zu veranlassen, besitzt das Gleichspannungsschaltgerät 100 der Figur 1 ferner eine mit dem ersten und dem zweiten Schaltelement 101, 123 sowie mit den elektromechanischen Schaltern 108, 110 verbundene Steuereinrichtung 140. Zum Speichern von Schaltbefehlen sowie einer Steuerungslogik kann beispielsweise eine Speichereinrichtung in der Steuereinrichtung vorgesehen sein. Die Steuereinrichtung ist dazu eingerichtet, zu Beginn eines Einschaltvorgangs des Gleichspannungsschaltgeräts 100, zu dem eine externe Gleichspannung an die Eingangsanschlüsse IN+, IN- angelegt ist, die Gleichspannungslast 200 an die Ausgangsanschlüsse OUT+, OUT- angeschlossen ist und sich das erste Schaltelement 101, das zweite Schaltelement 123 und die elektromechanischen Schalter 108, 110 jeweils im geöffneten Zustand befinden, zunächst das zweite Schaltelement 123 des ersten Vorladezweigs 120 zum Schließen anzusteuern. Ferner ist die Steuereinrichtung 140 dazu eingerichtet, anschließend die elektromechanischen Schalter 108, 110 zum Schließen anzusteuern, und zwar derart, dass sie zumindest einen der elektromechanischen Schalter 108, 110 erst nach einem vollständigen Aufladen von zumindest parasitären Kapazitäten des ersten Schaltelements 101 mittels des ersten Vorladezweigs 120 auf ein Eingangsspannungsniveau zum Schließen ansteuert. Zudem ist die Steuereinrichtung 140 dazu eingerichtet, insbesondere daran anschließend das zweite Schaltelement 123 des ersten Vorladezweigs zum Öffnen und das erste Schaltelement 101 zum Schließen anzusteuern und somit ein elektrisches Anschließen der Gleichspannungslast 200 an die externe Gleichspannung zu veranlassen. Die Steuereinrichtung 140 kann insbesondere als Mikrocontroller oder als sog. Field Programmable Gate Array (FPGA) ausgebildet sein. Um zumindest einen der elektromechanischen Schalter 108, 110 erst nach dem vollständigen Aufladen von zumindest den parasitären Kapazitäten des ersten Schaltelements 101 zum Schließen anzusteuern, kann die Steuereinrichtung 140 beispielsweise das Schließen des zumindest einen der elektromechanischen Schalter 108, 110 mit einer vorbestimmten Zeitverzögerung nach dem Schließen des zweiten Schaltelements 123 des ersten Vorladezweigs 120 veranlassen. Die Zeitverzögerung entspricht dabei mindestens der Zeit, die zum vollständigen Aufladen sämtlicher vorhandener parasitärer Kapazitäten auf der Eingangsseite des Gleichspannungsschaltgeräts 100 erforderlich ist. Durch ein zuvor beschriebenes Ansteuern der jeweiligen Schaltelemente 123, 101 bzw. elektromechanischen Schalter 108, 110 des Gleichspannungsschaltgeräts 100 ergeben sich die zuvor bereits genannten Vorteile eines geringeren Verschleißes und infolgedessen einer längeren technischen Lebensdauer des betreffenden elektromechanischen Schalters bzw. der betreffenden elektromechanischen Schalter.

Das in Figur 1 dargestellte Gleichspannungsschaltgerät 100 umfasst ferner beispielhaft einen zweiten Vorladezweig 105, der parallel zu dem ersten Schaltelement 101 geschaltet ist und zum Aufladen von Kapazitäten auf der Ausgangsseite des Gleichspannungsschaltgeräts 100 eingerichtet ist. Im Beispiel der Figur 1 umfasst der zweite Vorladezweig 105 eine Reihenschaltung eines dritten ansteuerbaren Schaltelements 103 und einer zweiten Strombegrenzungseinrichtung 104. Die zweite Strombegrenzungseinrichtung 104 weist gemäß Figur 1 bespielhaft einen ohmschen Widerstand auf bzw. ist insbesondere als ohmscher Widerstand ausgebildet. Wie auch die Strombegrenzungseinrichtung 124 des ersten Vorladezweigs 120, so kann die zweite Strombegrenzungseinrichtung 104 in einer weiteren Ausführungsform alternativ beispielsweise als Schaltungsanordnung ausgebildet sein, die einen Tiefsetzsteller umfasst. Nach dem Aufladen von parasitären Kapazitäten auf der Eingangsseite des Gleichspannungsschaltgeräts 100, d. h. gemäß Figur 1 der parasitären Kapazitäten des erstes Schaltelements 101 und der Überspannungsschutzeinrichtung 150, werden die elektromechanischen Schalter 108, 110 durch die Steuereinrichtung 140 zum Schließen angesteuert. Bevor jedoch das erste Schaltelement 101 zum Schließen angesteuert wird, sodass dieses elektrisch leitend wird, aktiviert die Steuerschaltung 140 bei dem in Figur 1 gezeigten Gleichspannungsschaltgerät 100 zunächst den zweiten Vorladezweig 105. Dazu steuert die Steuereinrichtung 140 das dritte Schaltelement 103 zum Schließen an, sodass mittels des zweiten Vorladezweigs 105 im strombegrenzten Modus Kapazitäten auf der Ausgangsseite des Gleichspannungsschaltgeräts 100 aufgeladen werden können. Ist das Aufladen dieser ausgangsseitigen Kapazitäten abgeschlossen, steuert die Steuereinrichtung 140 letztendlich das erste Schaltelement 101 zum Schließen an, wodurch die Gleichspannungslast 200 an die externe Gleichspannung elektrisch angeschlossen wird. Zudem kann die Steuereinrichtung 140 optional das dritte Schaltelement 103 des zweiten Vorladezweigs 105 und/oder das zweite Schaltelement 123 des ersten Vorladezweigs 120 wieder zum Öffnen ansteuern. Durch ein Aufladen von Kapazitäten auf der Ausgangsseite des Gleichspannungsschaltgeräts 100 in einem strombegrenzen Modus mittels des zweiten Vorladezweigs 105 werden sowohl die beiden in Plusleiter und Minusleiter angeordneten elektromechanischen Schalter 108, 110, und ferner auch die elektrisch angeschlossene Gleichspannungslast 200 aufgrund des strombegrenzten Modus weniger belastet, sodass sie einen geringeren Verschleiß erfahren.

Auch wenn in Figur 1 nicht dargestellt, so kann das Gleichspannungsschaltgerät 100 gemäß Figur 1 in einer weiteren Ausführungsform einen weiteren elektromechanischen Schalter aufweisen, welcher parallel zu dem ersten Schaltelement 101 geschaltet ist. Dieser weitere elektromechanische Schalter ist dazu ausgebildet, eine Verlustleistung zu reduzieren, wenn sich das erste Schaltelement 101 bei einem Schließen des weiteren elektromechanischen Schalters in einem elektrisch leitenden Zustand befindet.

Insbesondere können durch das Zuschalten des weiteren elektromechanischen Schalters Durchlassverluste des ersten Schaltelements 101, wenn dieses sich in einem elektrisch leitenden Zustand befindet, verringert werden.

Figur 1 stellt auch ein erfindungsgemäßes Schaltsystem 300 dar, welches neben dem zuvor beschriebenen Gleichspannungsschaltgerät 100 ferner die an die Ausgangsanschlüsse OUT+, OUT- des Gleichspannungsschaltgeräts 100 angeschlossene Gleichspannungslast 200 und eine an die Eingangsanschlüsse IN+, INdes Gleichspannungsschaltgeräts 100 angeschlossene Gleichspannungsquelle umfasst. In Figur 1 ist diese Gleichspannungsquelle beispielhaft als Gleichspannungsbus 4a ausgebildet.

Figur 2 zeigt ein Schaltbild eines Gleichspannungsschaltgeräts 100 zum Koppeln, insbesondere zum Einschalten einer Gleichspannungslast 200 gemäß einer zweiten Ausführungsform der Erfindung, wobei das Gleichspannungsschaltgerät 100 gemäß Figur 2 beispielhaft bereits an eine Gleichspannungsquelle 4 angeschlossen ist. Das Gleichspannungsschaltgerät 100 der Figur 2 entspricht im Wesentlichen dem in Figur 1 gezeigten Gleichspannungsschaltgerät und unterscheidet sich von der in Figur 1 gezeigten Ausführungsform dadurch, dass das erste Schaltelement 101 statt in dem Plusleiter 8 nun in dem Minusleiter 10 angeordnet ist. Zudem umfasst das Gleichspannungsschaltgerät 100 gemäß Figur 2 im Gegensatz zu dem in Figur 1 gezeigten Gleichspannungsschaltgerät keinen zweiten Vorladezweig. Zum Aufladen bzw. Vorladen von ausgangsseitigen Kapazitäten des in Figur 2 gezeigten Gleichspannungsschaltgeräts 100 kann beispielsweise ein separates Vorladegerät parallel zu dem Gleichspannungsschaltgerät 100 geschaltet werden, insbesondere nachdem zumindest die parasitären Kapazitäten des ersten Schaltelements 101 mittels des ersten Vorladezweigs 120 vollständig aufgeladen worden sind.

Der erste Vorladezweig 120 des in Figur 2 gezeigten Gleichspannungsschaltgeräts 100 ist, wie auch in Figur 1, zwischen dem Plusleiter und dem Minusleiter des Gleichspannungsschaltgeräts 100 angeordnet bzw. geschaltet und insbesondere dazu eingerichtet, neben den parasitären Kapazitäten des ersten Schaltelements 101 auch die parasitären Kapazitäten der Überspannungsschutzeinrichtung 150 auf das jeweilige Eingangsspannungsniveau aufzuladen, wenn sich das Gleichspannungsschaltgerät 100 in einem Zustand befindet, in welchem eine externe Gleichspannung an die Eingangsanschlüsse IN+, IN- angelegt ist, das erste Schaltelement 101 und zumindest einer der elektromechanischen Schalter 108, 110 geöffnet sind und das zweite Schaltelement 123 des ersten Vorladezweigs 120 geschlossen ist, wie in Figur 2 skizziert. Um den ersten Vorladezweig 120 zu aktivieren, umfasst das Gleichspannungsschaltgerät 100 der Figur 2, wie auch in Figur 1, eine Steuereinrichtung 140, welche vorzugsweise sämtliche Schaltelemente 101, 123 und elektromechanische Schalter 108, 110, 112 des Gleichspannungsschaltgeräts 100 gemäß einer vorbestimmten Steuerungslogik ansteuert. Die Steuerungslogik kann beispielsweise in einer Speichereinrichtung der Steuereinheit 140 abgelegt sein. Die Steuereinrichtung 140 ist folglich dazu ausgebildet, ausgehend von einem Ausgangszustand mit an das Gleichspannungsschaltgerät 100 angelegter Gleichspannung bzw. angeschlossener Gleichspannungsquelle 4, angeschlossener Gleichspannungslast 200 und sich im geöffneten bzw. elektrisch nichtleitenden Zustand befindlichen Schaltelementen 101, 123 und elektromechanischen Schaltern 108, 110, 112, zunächst das zweite Schaltelement 123 des ersten Vorladezweigs 120 zum Schließen anzusteuern. Ferner ist die Steuereinrichtung 140 dazu eingerichtet, anschließend die elektromechanischen Schalter 108, 110 zum Schließen anzusteuern, wobei die Steuereinrichtung 140 zumindest einen der elektromechanischen Schalter 108, 110 erst nach einem vollständigen Aufladen der parasitären Kapazitäten des ersten Schaltelements 101, und optional auch weiterer parasitärer Kapazitäten von parallel zu dem ersten Schaltelement 101 geschalteten Schaltungselementen mit kapazitivem Anteil mittels des ersten Vorladezweigs 120, zum Schließen ansteuert. Um dies zu gewährleisten, kann die Steuereinrichtung 140 beispielsweise den zumindest einen der elektromechanischen Schalter 108, 110 mit einer vorbestimmten Zeitverzögerung nach dem Ansteuern des zweiten Schaltelements 123 zum Schließen ansteuern. Die vorbestimmte Zeitverzögerung kann z.B. in der Speichereinrichtung der Steuereinrichtung 140 gespeichert sein. Zudem ist die Steuereinrichtung 140 dazu eingerichtet, insbesondere daran anschließend das zweite Schaltelement 123 des ersten Vorladezweigs 120 zum Öffnen und das erste Schaltelement 101 zum Schließen anzusteuern und somit ein elektrisches Anschließen der Gleichspannungslast 200 an die externe Gleichspannung zu veranlassen.

Darüber hinaus weist das in Figur 2 dargestellte Gleichspannungsschaltgerät 100 einen weiteren elektromechanischen Schalter 112 auf, der parallel zu dem ersten Schaltelement 101 geschaltet ist. Dieser weitere elektromechanische Schalter 112 ist dazu ausgebildet, eine Verlustleistung zu reduzieren, wenn sich das erste Schaltelement 101 bei einem Schließen des weiteren elektromechanischen Schalters 112 in einem elektrisch leitenden Zustand befindet. Ist das erste Schaltelement 101 elektrisch leitend, kommt es stets auch zu Durchlassverlusten bei einem Stromfluss durch das erste Schaltelement 101, welche durch das parallele Zuschalten des weiteren elektromechanischen Schalters 112 verringert werden. Die Steuereinrichtung 140 kann insbesondere dazu eingerichtet sein, auch den weiteren elektromechanischen Schalter 112 zum Öffnen und Schließen anzusteuern.

Auch Figur 2 zeigt ferner auch ein erfindungsgemäßes Schaltsystem 300. Das Schaltsystem 300 umfasst neben dem zuvor beschriebenen Gleichspannungsschaltgerät 100 ferner die an die Ausgangsanschlüsse OUT+, OUT- des Gleichspannungsschaltgeräts 100 angeschlossene Gleichspannungslast 200 und eine an die Eingangsanschlüsse IN+, IN- des Gleichspannungsschaltgeräts 100 angeschlossene Gleichspannungsquelle 4.

## Patentansprüche

1. Gleichspannungsschaltgerät (100) zum Koppeln, insbesondere zum Einschalten einer Gleichspannungslast (200) umfassend:
- einen ersten und einen zweiten Eingangsanschluss (IN+, IN-), die zum Anlegen einer externen Gleichspannung ausgebildet sind,
- einen ersten und einen zweiten Ausgangsanschluss (OUT+, OUT-), die zum elektrischen Anschließen einer Gleichspannungslast (200) ausgebildet sind,
- einen Plusleiter (8), der zwischen dem ersten Eingangsanschluss (IN+) und dem ersten Ausgangsanschluss (OUT+) verläuft,
- einen Minusleiter (10), der zwischen dem zweiten Eingangsanschluss (IN-) und dem zweiten Ausgangsanschluss (OUT-) verläuft,
- ein erstes halbleiterbasiertes, ansteuerbares Schaltelement (101, 101'), welches in dem Plusleiter (8) oder in dem Minusleiter (10) angeordnet ist,
- einen in dem Plusleiter (8) angeordneten elektromechanischen Schalter (108) und einen in dem Minusleiter (10) angeordneten elektromechanischen Schalter (110), und
- einen ersten Vorladezweig (120) umfassend eine Reihenschaltung eines zweiten ansteuerbaren Schaltelements (123) und einer ersten Strombegrenzungseinrichtung (124), wobei der erste Vorladezweig (120) zwischen dem Plusleiter (8) und dem Minusleiter (10) angeordnet ist,
wobei der erste Vorladezweig (120) dazu eingerichtet ist, zumindest parasitäre Kapazitäten des ersten Schaltelements (101, 101') auf ein Eingangsspannungsniveau aufzuladen, wenn sich das Gleichspannungsschaltgerät (100) in einem Zustand befindet, in welchem eine externe Gleichspannung an die Eingangsanschlüsse (IN+, IN-) angelegt ist, das erste Schaltelement (101, 101') und zumindest einer der elektromechanischen Schalter (108, 110) geöffnet sind und das zweite Schaltelement (123) geschlossen ist,
- eine Steuereinrichtung (140) zum Aktivieren des ersten Vorladezweigs (120), **dadurch gekennzeichnet, dass** die Steuereinrichtung (140) zum Ansteuern des ersten und des zweiten Schaltelements (101, 123) und der elektromechanischen Schalter (108, 110) gemäß einer vorbestimmten Steuerungslogik ausgebildet ist derart, dass die Steuereinrichtung (140) den ersten Vorladezweig (120) zum Aufladen zumindest parasitärer Kapazitäten des ersten Schaltelements (101) in einem strombegrenzten Modus aktiviert, bevor sich das Gleichspannungsschaltgerät (100) in einem Zustand befindet, in welchem beide elektromechanischen Schalter (108, 110) geschlossen sind.

2. Gleichspannungsschaltgerät (100) gemäß Anspruch 1,
einewobei die Steuereinrichtung (140) mit dem ersten und dem zweiten Schaltelement (101, 101' 123) und den elektromechanischen Schaltern (108, 110) verbundene ist und dazu eingerichtet ist,
- zu Beginn eines Einschaltvorgangs des Gleichspannungsschaltgeräts (100), zu dem eine externe Gleichspannung an die Eingangsanschlüsse (IN+, IN-) angelegt ist, eine Gleichspannungslast (200) an die Ausgangsanschlüsse (OUT+, OUT-) angeschlossen ist und sich das erste Schaltelement (101, 101'), das zweite Schaltelement (123) und die elektromechanischen Schalter (108, 110) jeweils im geöffneten Zustand befinden,
zunächst das zweite Schaltelement (123) zum Schließen anzusteuern,
- anschließend die elektromechanischen Schalter (108, 110) zum Schließen anzusteuern, wobei die Steuereinrichtung (140) dazu eingerichtet ist, zumindest einen der elektromechanischen Schalter (108, 110) erst nach einem vollständigen Aufladen von zumindest parasitären Kapazitäten des ersten Schaltelements (101, 101') mittels des ersten Vorladezweigs (120) auf ein Eingangsspannungsniveau zum Schließen anzusteuern, und
- insbesondere daran anschließend das zweite Schaltelement (123) zum Öffnen und das erste Schaltelement (101, 101') zum Schließen anzusteuern und somit ein elektrisches Ankoppeln der Gleichspannungslast (200) an die externe Gleichspannung zu veranlassen.

3. Gleichspannungsschaltgerät (100) gemäß einem der Ansprüche 1 oder 2, ferner umfassend einen zweiten Vorladezweig (105), der parallel zu dem ersten Schaltelement (101, 101') geschaltet ist und zum Aufladen von Kapazitäten auf der Ausgangsseite des Gleichspannungsschaltgeräts (100) eingerichtet ist.

4. Gleichspannungsschaltgerät (100) gemäß Anspruch 3, wobei der zweite Vorladezweig (105) eine Reihenschaltung eines dritten ansteuerbaren Schaltelements (103) und einer zweiten Strombegrenzungseinrichtung (104) umfasst.

5. Gleichspannungsschaltgerät (100) gemäß einem der Ansprüche 1 bis 4, wobei die erste und/oder zweite Strombegrenzungseinrichtung (124, 104) als ohmscher Widerstand ausgebildet ist.

6. Gleichspannungsschaltgerät (100) gemäß einem der Ansprüche 1 bis 5, wobei das zweite Schaltelement (123) als Feldeffekttransistor, insbesondere als MOSFET, als IGBT oder als Relaiskontakt ausgebildet ist.

7. Gleichspannungsschaltgerät (100) gemäß einem der Ansprüche 1 bis 6, wobei die in Plusleiter (8) und Minusleiter (10) integrierten elektromechanischen Schalter (108, 110) als Relais ausgebildet sind.

8. Gleichspannungsschaltgerät (100) gemäß einem der Ansprüche 1 bis 7, wobei das erste Schaltelement (101') zwei antiseriell geschaltete Halbleiterschalter umfasst.

9. Gleichspannungsschaltgerät (100) gemäß einem der Ansprüche 1 bis 8, wobei der Plusleiter (8) und der Minusleiter (10) als Leiterbahnen auf einer Platine ausgeführt sind.

10. Gleichspannungsschaltgerät (100') gemäß einem der Ansprüche 1 bis 9, wobei das Gleichspannungsschaltgerät (100) einen weiteren elektromechanischen Schalter (112) aufweist, der parallel zu dem ersten Schaltelement (101, 101') geschaltet ist und dazu ausgebildet ist, eine Verlustleistung zu reduzieren, wenn sich das erste Schaltelement (101, 101') bei einem Schließen des weiteren elektromechanischen Schalters (112) in einem elektrisch leitenden Zustand befindet.

11. Schaltsystem (300) mit einem Gleichspannungsschaltgerät (100) gemäß einem der Ansprüche 1 bis 10, ferner umfassend eine an die Ausgangsanschlüsse (OUT+, OUT-) des Gleichspannungsschaltgeräts (100) angeschlossene Gleichspannungslast (200) und eine an die Eingangsanschlüsse (IN+, IN-) des Gleichspannungsschaltgeräts (100) angeschlossene Gleichspannungsquelle (4), welche insbesondere als Gleichspannungsbus (4a) ausgebildet ist.

## Claims

1. DC voltage switching device (100) for coupling, in particular for switching on a DC voltage load (200), comprising:
- a first and a second input terminal (IN+, IN-) designed for applying an external DC voltage,
- a first and a second output terminal (OUT+, OUT-) designed for the electrical connection of a DC voltage load (200),
- a positive conductor (8) extending between the first input terminal (IN+) and the first output terminal (OUT+),
- a negative conductor (10) extending between the second input terminal (IN-) and the second output terminal (OUT-),
- a first semiconductor-based, controllable switching element (101, 101') arranged in the positive conductor (8) or in the negative conductor (10),
- an electromechanical switch (108) arranged in the positive conductor (8) and an electromechanical switch (110) arranged in the negative conductor (10), and
- a first precharge branch (120) comprising a series connection of a second controllable switching element (123) and a first current limiting device (124), wherein the first precharge branch (120) is arranged between the positive conductor (8) and the negative conductor (10),
wherein the first precharge branch (120) is designed to charge at least parasitic capacitances of the first switching element (101, 101') to an input voltage level when the DC voltage switching device (100) is in a state in which an external DC voltage is applied to the input terminals (IN+, IN-), the first switching element (101, 101') and at least one of the electromechanical switches (108, 110) are open and the second switching element (123) is closed,
- a control device (140) for activating the first precharge branch (120),
**characterized in that** the control device (140) for controlling the first and second switching elements (101, 123) and the electromechanical switches (108, 110) according to a predetermined control logic such that the control device (140) activates the first precharge branch (120) to charge at least parasitic capacitances of the first switching element (101) in a current-limited mode before the DC voltage switching device (100) is in a state in which both electromechanical switches (108, 110) are closed.

2. DC voltage switching device (100) according to claim 1, wherein the control device (140) is connected to the first and second switching elements (101, 101', 123) and the electromechanical switches (108, 110) and is designed to
- at the start of a switch-on operation of the DC voltage switching device (100), during which an external DC voltage is applied to the input terminals (IN+, IN-), a DC voltage load (200) is connected to the output terminals (OUT+, OUT-) and the first switching element (101, 101') and the second switching element (123) and the electromechanical switches (108, 110) are each in the open state, first to control the second switching element (123) to close,
- then to control the electromechanical switches (108, 110) to close, wherein the control device (140) is designed to control at least one of the electromechanical switches (108, 110) to close only after at least parasitic capacitances of the first switching element (101, 101') by means of the first precharge branch (120) to an input voltage level for closing, and
- in particular, subsequently to control the second switching element (123) to open and the first switching element (101, 101') to close, thereby causing the DC voltage load (200) to be electrically coupled to the external DC voltage.

3. DC voltage switching device (100) according to one of claims 1 or 2, further comprising a second precharge branch (105) which is connected in parallel to the first switching element (101, 101') and is designed to charge capacitances on the output side of the DC voltage switching device (100).

4. DC voltage switching device (100) according to claim 3, wherein the second precharge branch (105) comprises a series connection of a third controllable switching element (103) and a second current limiting device (104).

5. DC voltage switching device (100) according to one of claims 1 to 4, wherein the first and/or second current limiting device (124, 104) is designed as an ohmic resistor.

6. DC voltage switching device (100) according to one of claims 1 to 5, wherein the second switching element (123) is designed as a field-effect transistor, in particular as a MOSFET, as an IGBT, or as a relay contact.

7. DC voltage switching device (100) according to one of claims 1 to 6, wherein the electromechanical switches (108, 110) integrated in the positive conductor (8) and negative conductor (10) are designed as relays.

8. DC voltage switching device (100) according to one of claims 1 to 7, wherein the first switching element (101') comprises two semiconductor switches connected in anti-series.

9. DC voltage switching device (100) according to one of claims 1 to 8, wherein the positive conductor (8) and the negative conductor (10) are designed as conductor tracks on a circuit board.

10. DC voltage switching device (100) according to one of claims 1 to 9, wherein the DC voltage switching device (100) has a further electromechanical switch (112) which is connected in parallel with the first switching element (101, 101') and is designed to reduce power loss when the first switching element (101, 101') is in an electrically conductive state when the further electromechanical switch (112) is closed.

11. Switching system (300) with a DC voltage switching device (100) according to one of claims 1 to 10, further comprising a DC voltage load (200) connected to the output terminals (OUT+, OUT-) of the DC voltage switching device (100) and a DC voltage source (4) connected to the input terminals (IN+, IN-) of the DC voltage switching device (100), which is designed in particular as a DC voltage bus (4a).

## Revendications

1. Appareil de commutation en tension continue (100) destiné à coupler, en particulier à mettre en circuit une charge de tension continue (200), comprenant :
- une première et une seconde borne d'entrée (IN+, IN-) conçues pour appliquer une tension continue externe,
- une première et une seconde borne de sortie (OUT+, OUT-) conçues pour connecter électriquement une charge de tension continue (200),
- un conducteur positif (8), lequel s'étend entre la première borne d'entrée (IN+) et la première borne de sortie (OUT+),
- un conducteur négatif (10), lequel s'étend entre la seconde borne d'entrée (IN-) et la seconde borne de sortie (OUT-),
- un premier élément de commutation (101, 101') commandable, à semi-conducteur, lequel est disposé dans le conducteur positif (8) ou dans le conducteur négatif (10),
- un commutateur (108) électromécanique disposé dans le conducteur positif (8) et un commutateur (110) électromécanique disposé dans le conducteur négatif (10), et
- une première branche de précharge (120) comprenant un circuit en série d'un deuxième élément de commutation (123) commandable et d'un premier dispositif de limitation de courant (124), la première branche de précharge (120) étant disposée entre le conducteur positif (8) et le conducteur négatif (10),
la première branche de précharge (120) étant conçue pour charger au moins les condensateurs parasites du premier élément de commutation (101, 101') à un niveau de tension d'entrée lorsque l'appareil de commutation en tension continue (100) est dans un état dans lequel une tension continue externe est appliquée aux bornes d'entrée (IN+, IN-), le premier élément de commutation (101, 101') et l'au moins un des commutateurs (108, 110) électromécaniques sont ouverts et le deuxième élément de commutation (123) est fermé,
- un dispositif de commande (140) destiné à activer la première branche de précharge (120), **caractérisé en ce que** le dispositif de commande (140) est conçu pour commander les premier et deuxième éléments de commutation (101, 123) et les commutateurs (108, 110) électromécaniques selon une logique de commande prédéterminée de telle sorte que le dispositif de commande (140) active la première branche de précharge (120) pour charger au moins les condensateurs parasites du premier élément de commutation (101) en mode limité en courant avant que l'appareil de commutation en tension continue (100) ne soit dans un état dans lequel les deux commutateurs (108, 110) électromécaniques sont fermés.

2. Appareil de commutation en tension continue (100) selon la revendication 1, dans lequel le dispositif de commande (140) est connecté au premier et au deuxième élément de commutation (101, 101', 123) et aux commutateurs (108, 110) électromécaniques et est conçu
- pour commander, au début d'un processus de mise en circuit de l'appareil de commutation en tension continue (100), dans lequel une tension continue externe est appliquée aux bornes d'entrée (IN+, IN-), une charge de tension continue (200) est connectée aux bornes de sortie (OUT+, OUT-) et le premier élément de commutation (101, 101'), le deuxième élément de commutation (123) et les commutateurs (108, 110) électromécaniques sont respectivement à l'état ouvert, d'abord la fermeture du deuxième élément de commutation (123),
- puis, pour commander la fermeture des commutateurs (108, 110) électromécaniques, dans lequel le dispositif de commande (140) est conçu pour commander la fermeture de l'au moins un des commutateurs (108, 110) électromécaniques, uniquement après une charge complète d'au moins les condensateurs parasites du premier élément de commutation (101, 101') au moyen de la première branche de précharge (120), à un niveau de tension continue, et,
- en particulier pour commander ensuite l'ouverture du deuxième élément de commutation (123) et la fermeture du premier élément de commutation (101, 101'), provoquant ainsi un couplage électrique de la charge de tension continue (200) à la tension continue externe.

3. Appareil de commutation en tension continue (100) selon l'une quelconque des revendications 1 ou 2, comprenant en outre une seconde branche de précharge (105), laquelle est connectée en parallèle au premier élément de commutation (101, 101') et laquelle est conçue pour charger les condensateurs du côté sortie de l'appareil de commutation en tension continue (100).

4. Appareil de commutation en tension continue (100) selon la revendication 3, dans lequel la seconde branche de précharge (105) comprend un circuit en série d'un troisième élément de commutation (103) commandable et d'un second dispositif de limitation de courant (104).

5. Appareil de commutation en tension continue (100) selon l'une quelconque des revendications 1 à 4, dans lequel le premier et/ou le second dispositif de limitation de courant (124, 104) est conçu sous la forme d'une résistance ohmique.

6. Appareil de commutation en tension continue (100) selon l'une quelconque des revendications 1 à 5, dans lequel le deuxième élément de commutation (123) est conçu sous la forme d'un transistor à effet de champ, en particulier sous la forme d'un MOSFET, d'un IGBT ou d'un contact à relais.

7. Appareil de commutation en tension continue (100) selon l'une quelconque des revendications 1 à 6, dans lequel les commutateurs (108, 110) électromécaniques intégrés au conducteur positif (8) et au conducteur négatif (10) sont conçus sous la forme de relais.

8. Appareil de commutation en tension continue (100) selon l'une quelconque des revendications 1 à 7, dans lequel le premier élément de commutation (101') comprend deux commutateurs à semi-conducteur connectés en anti-série.

9. Appareil de commutation en tension continue (100) selon l'une quelconque des revendications 1 à 8, dans lequel le conducteur positif (8) et le conducteur négatif (10) sont conçus sous la forme de pistes conductrices sur une platine.

10. Appareil de commutation en tension continue (100) selon l'une quelconque des revendications 1 à 9, dans lequel l'appareil de commutation en tension continue (100) comporte un commutateur (112) électromécanique supplémentaire connecté en parallèle au premier élément de commutation (101, 101') et est conçu pour réduire les pertes de puissance lorsque le premier élément de commutation (101, 101'), lors d'une fermeture du commutateur (112) électromécanique supplémentaire, est dans un état électriquement conducteur.

11. Système de commutation (300) comportant un appareil de commutation en tension continue (100) selon l'une quelconque des revendications 1 à 10, comprenant en outre une charge de tension continue (200) connectée aux bornes de sortie (OUT+, OUT-) de l'appareil de commutation en tension continue (100) et une source de tension continue (4) connectée aux bornes d'entrée (IN+, IN-) de l'appareil de commutation en tension continue (100), laquelle est conçue, en particulier sous la forme d'un bus de tension continue (4a).
